# FASCICULE DE BREVET EUROPEEN

(11) **EP 1 704 335 B1**
(45) Date de publication et mention de la délivrance du brevet: **08.04.2009**
(21) Numéro de dépôt: 04816507.0
(22) Date de dépôt: 06.12.2004
(51) Int. Cl.: F16B 37/04

(54) **AGENCEMENT POUR LA FIXATION PAR VISSAGE D'UN ELEMENT D'EQUIPEMENT DANS UN CORPS CREUX**
ANORDNUNG ZUR SCHRAUBBEFESTIGUNG EINES EINRICHTUNGSELEMENTS AN EINEM HOHLKÖRPER
ARRANGEMENT FOR FIXING BY SCREWING AN EQUIPMENT ELEMENT TO A HOLLOW BODY

(30) Priorité: 19.12.2003 FR 0315056
(43) Date de publication de la demande: 27.09.2006
(73) Titulaire: RENAULT S.A.S., 92100 Boulogne Billancourt (FR)
(72) Inventeur: VINCENT, Philippe, F-92500 Rueil Malmaison (FR)
(86) Numéro de dépôt international: PCT/FR2004/050653
(87) Numéro de publication internationale: WO 2005/061910

(56) Documents cités:
- FR-A- 2 544 411
- US-A- 3 783 922

## Description

L'invention concerne un agencement pour la fixation par vissage d'un élément d'équipement, notamment un attelage ou un porte-vélos, dans un corps creux tel qu'un longeron tubulaire.

L'invention concerne plus particulièrement un agencement pour la fixation par vissage d'un élément d'équipement, notamment un attelage ou un porte-vélos, dans un corps creux, du type dans lequel l'élément d'équipement comporte au moins un perçage qui est traversé par une vis axiale de fixation qui est reçue dans au moins un perçage d'une première paroi du corps creux et du type dans lequel le corps creux présente une section sensiblement polygonale, notamment rectangulaire, comportant au moins une deuxième paroi perpendiculaire à la première paroi.

On connaît de nombreux exemples d'agencements de ce type.

Le document US-A-3783922 décrit un élément de retenue pour l'installation en aveugle d'un écrou ou d'un boulon dans un trou de montage prévu dans un panneau.

Conventionnellement, un tel agencement comporte une vis qui est reçue dans un écrou prisonnier qui est reçu dans une cage solidaire du corps creux, ou qui est soudé au corps creux.

Cette conception présente l'inconvénient de rendre le montage dans le corps creux difficile. De plus l'écrou risque de tomber dans le corps creux lors du montage et d'être par la suite une source de bruit parasite.

L'invention propose de remédier à cet inconvénient en proposant un agencement permettant d'immobiliser la vis par l'intermédiaire d'un montage vis-écrou qui traverse une paroi du corps creux.

Avantageusement, le montage vis-écrou traverse une lumière d'une paroi du corps creux. Cette lumière peut être obturée par un bouchon en cas d'absence du montage vis-écrou.

L'invention permet ainsi de créer une fixation d'un coût réduit pour un nombre limité de véhicules produits en grande série.

En effet, dans le cadre d'une production en grande série, il n'est pas possible de mettre en place de manière automatisée un montage conventionnel comportant un écrou prisonnier sans que touts les véhicules issus de la chaîne de fabrication ne soient équipés de ce montage. Il en résulte un surcoût pour des véhicules ne nécessitant pas ce type de fixation.

L'invention permet, en cas d'absence du système vis-écrou, de remplacer celui-ci par un bouchon pouvant être ôté par la suite dans le cadre d'une intervention d'après-vente ayant pour but d'équiper le véhicule du système de fixation selon l'invention.

Dans ce but, l'invention propose un agencement du type décrit précédemment, caractérisé en ce qu'il comporte au moins des moyens d'insertion dans le corps creux d'un écrou, dont au moins un perçage axial taraudé est complémentaire de la vis, et dont une face de serrage est destinée à être serrée contre une face intérieure de la première paroi du corps creux, et en ce que ledit écrou comporte au moins une face d'appui, qui est parallèle à la direction axiale et qui est excentrée par rapport à son perçage d'une distance supérieure à la distance séparant l'axe du perçage de la deuxième paroi, pour permettre un blocage en rotation de l'écrou par immobilisation de sa face d'appui contre une face intérieure de la deuxième paroi du corps creux lors de son serrage.

Selon d'autres caractéristiques de l'invention :
- le moyen d'insertion de l'écrou dans le corps creux est porté par une troisième paroi du corps creux, qui est opposée à la première paroi, et qui comporte une lumière, agencée sensiblement en regard du perçage de la première paroi,
- le moyen d'insertion forme un bouchon de la lumière, qui est d'un encombrement au moins égal à celui de l'écrou, et qui comporte des moyens de portage et de libération de l'écrou qui sont destinés à permettre l'introduction de l'écrou dans le corps creux avec le bouchon puis sa libération du bouchon,
- les moyens de portage et de libération de l'écrou par le bouchon comportent au moins :
   - une face transversale d'assise du bouchon, qui est destinée à recevoir une face de l'écrou opposée à sa face de serrage, et
   - au moins deux bras parallèles à la direction axiale qui sont destinés à enserrer la périphérie de l'écrou,
- l'extrémité libre de chaque bras comporte un ergot tourné vers l'écrou, qui est destiné à immobiliser axialement l'écrou dans le bouchon entre sa face de serrage et la face opposée;
- l'écrou est sensiblement octogonal et les moyens de portage et de libération de l'écrou comportent quatre bras destinés à immobiliser quatre pans non consécutifs de l'écrou,
- l'écrou comporte deux perçages axiaux taraudés agencés chacun à une même distance d'un pan de l'écrou formant une face d'appui de l'écrou, pour permettre un montage indifférencié de l'écrou dans le bouchon,
- le bouchon comporte une portée d'emboîtement destinée à coopérer avec le bord de la lumière de la troisième paroi du corps creux,
- le bouchon est réalisé en un matériau plastique,
- les ergots du bouchon sont destructibles lors du retrait de l'écrou,
- les bras du bouchon sont flexibles.

L'invention concerne aussi un procédé de montage d'un agencement du type décrit précédemment, caractérisé en ce qu'il comporte :
- une première étape au cours de laquelle on introduit l'écrou dans le bouchon,
- une deuxième étape au cours de laquelle on introduit le bouchon portant l'écrou dans la lumière du corps creux,
- une troisième étape au cours de laquelle on introduit la vis dans le perçage de la première paroi du corps creux puis dans le perçage taraudé de l'écrou,
- une quatrième étape au cours de laquelle on effectue une rotation de la vis pour libérer l'écrou du bouchon,
- une cinquième étape au cours de laquelle on poursuit la rotation de la vis pour faire pivoter l'écrou de manière que son pan formant la face d'appui immobilise l'écrou en rotation contre la face intérieure de la deuxième paroi du corps creux,
- une sixième et dernière étape au cours de laquelle on termine la rotation de la vis de manière que la face d'appui de l'écrou glisse contre la face intérieure de la deuxième paroi du corps creux et de manière que sa face de serrage vienne serrer la première paroi du corps creux,

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de la vis, de l'écrou et du bouchon d'un agencement selon l'invention ;
- la figure 2 est une vue en coupe d'un agencement selon l'invention représenté dans une position d'insertion du bouchon ;
- la figure 3 est une vue en coupe d'un agencement selon l'invention représenté dans une position d'extraction de l'écrou hors du bouchon ;
- la figure 4 est une vue en coupe d'un agencement selon l'invention représenté dans une position de blocage en rotation de l'écrou ;
- la figure 5 est une vue en coupe d'un agencement selon l'invention représenté dans une position de serrage de l'écrou ;

Dans la description qui va suivre, des chiffres de référence identiques désignent des pièces identiques ou ayant des fonctions similaires.

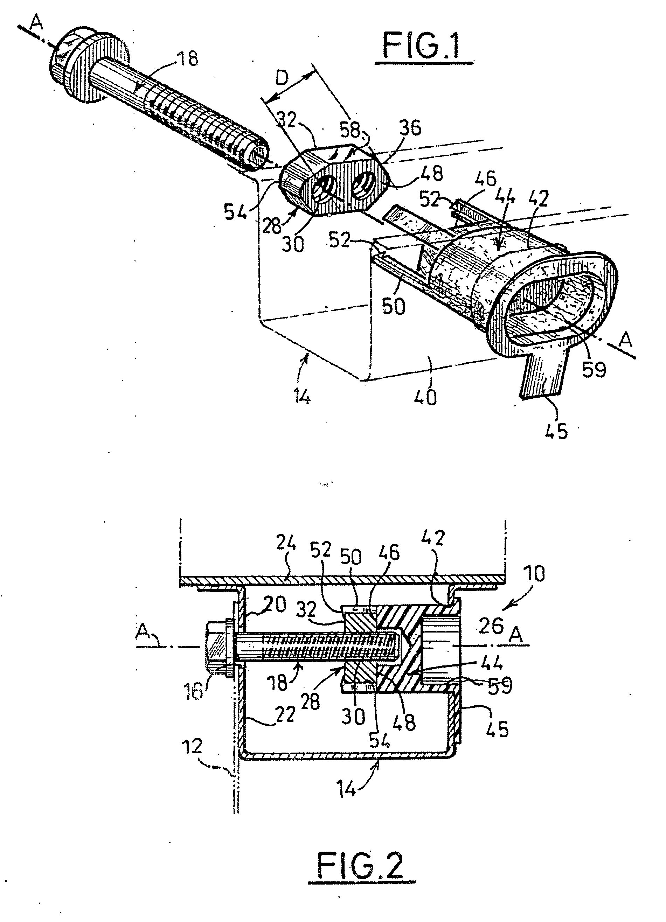

Par convention, les termes "supérieur" ou "inférieur" désignent respectivement des éléments ou des positions orientés respectivement vers le haut ou le bas des figures 1 à 5.

On a représenté aux figures 2 à 5 un agencement 10 pour la fixation par vissage d'un élément d'équipement 12, notamment un attelage ou un porte-vélos, à un corps creux 14. Le corps creux peut, de manière non limitative de l'invention, être constitué d'un longeron tubulaire d'un véhicule automobile.

De manière connue, l'élément d'équipement 12 comporte au moins un perçage 15 qui est traversé par une vis axiale 18 de fixation d'axe "A" qui est reçue dans au moins un perçage 20 qui est coaxial à l'axe "A" et qui est formé dans une première paroi 22 du corps creux 14.

Le corps creux 14 présente une section sensiblement polygonale, notamment rectangulaire, et il comporte au moins une deuxième paroi 24 qui est perpendiculaire à la première paroi 22.

Comme représenté sure les figures 1 à 5, le corps creux 14 peut être un corps creux du type d'un longeron tubulaire en "U" qui est fixé sur une paroi plane tel qu'un plancher du véhicule.

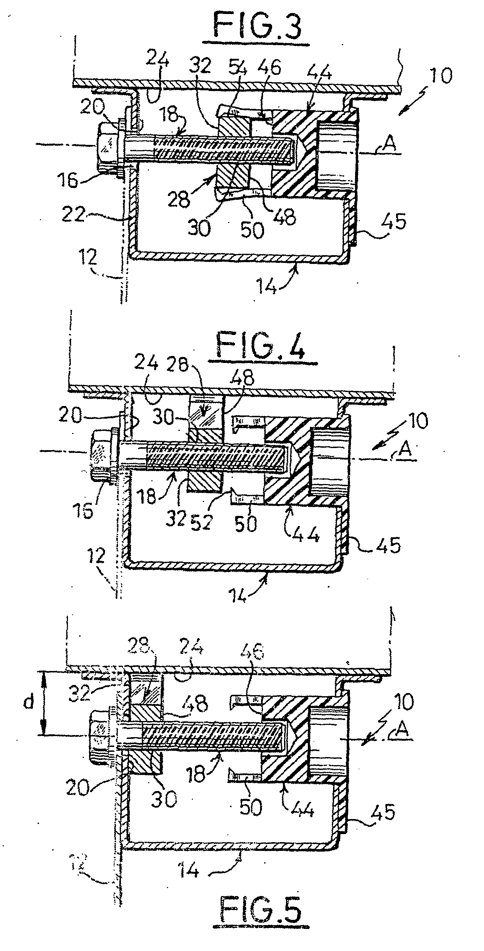

L'invention propose un agencement qui comporte au moins un moyen 26 d'insertion dans le corps creux 14 d'un écrou 28, dont au moins un perçage axial taraudé 30 est complémentaire de la vis 18, et dont une face 32 de serrage est destinée à être serrée contre une face intérieure 34 de la première paroi 22 du corps creux 14, et en ce que, comme l'illustre les figures 1 et 5, ledit écrou 18 comporte au moins une face d'appui 36, qui est parallèle à la direction axiale "A" et qui est excentrée par rapport à son perçage 30 d'une distance "D" supérieure à la distance "d" séparant l'axe du perçage 20 de la deuxième paroi 24, pour permettre un blocage en rotation de l'écrou 18 par immobilisation de sa face d'appui 36 contre une face intérieure 38 de la deuxième paroi 24 du corps creux 14 lors de son serrage, comme représenté à la figure 5.

Plus particulièrement, le moyen 26 d'insertion de l'écrou dans le corps creux 14 comporte est porté par une troisième paroi 40 du corps creux 14, qui est opposée à la première paroi 22 et qui comporte une lumière 42, agencée sensiblement en regard du perçage 20 de la première paroi 22.

Un bouchon 44 complémentaire de la lumière 42 dans ladite lumière 42. Ce bouchon 44 présente un encombrement au moins égal à celui de l'écrou 18. Le moyen 26 comporte aussi des moyens de portage et de libération de l'écrou 18, portés par ledit bouchon 44, qui sont destinés à permettre l'introduction de l'écrou 18 dans le corps creux 14 avec le bouchon 44, puis sa libération.

Avantageusement le bouchon 44 comporte une patte 45 de préhension qui permet son extraction hors du corps creux 14.

Les moyens de portage et de libération de l'écrou 28 qui sont portés par le bouchon 44 comportent au moins une face transversale 46 d'assise du bouchon 44, qui est destinée à recevoir une face 48 de l'écrou opposée à sa face 32 de serrage, et au moins deux bras 50 parallèles à la direction axiale qui sont destinés à enserrer la périphérie de l'écrou 28.

Dans le mode de réalisation préféré de l'invention, l'extrémité libre de chaque bras 50 comporte un ergot 52 tourné vers l'écrou 28, qui est destiné à immobiliser axialement l'écrou 28 dans le bouchon 46 entre sa face 32 de serrage et sa face opposée 48.

De préférence, le bouchon 44 est réalisé en un matériau plastique.

Selon un premier mode de réalisation de l'invention (non représenté) les ergots 52 du bouchon 46 peuvent être conçus de manière à être destructibles lorsque, comme on le verra en référence à la figure 3, l'écrou 28 est extrait du bouchon 46.

En variante, selon un second mode de réalisation de l'invention qui a été représenté à la figure 3, les bras 50 du bouchon 44 peuvent être conçus de manière flexible, de sorte que les bras 50 s'écartent pour permettre l'extraction de l'écrou 28 lorsque celui-ci est extrait de l'écrou 28 comme représenté à la figure 3.

Comme l'illustre la figure 1, l'écrou 28 est sensiblement octogonal et les moyens de portage et de libération de l'écrou comportent quatre bras 50 destinés à immobiliser quatre pans 54, non consécutifs de l'écrou, dont notamment au moins un pan forme la face 36 d'appui de l'écrou.

Ainsi, il sera compris que pour permettre l'excentration de la face 36 d'appui par rapport au perçage 30 de l'écrou, l'écrou 28 comporte quatre pans 54 non consécutifs, de même dimension, deux pans 56 de dimension réduite deux à deux opposés, deux pans 58 de dimension élevée deux à deux opposées, et le bouchon 44 présente une forme oblongue associée.

Dans le mode de réalisation préféré de l'invention, comme l'illustre la figure 1, l'écrou 28 comporte deux perçages 30 axiaux taraudés qui sont agencés chacun à une même distance d'un pan 54 de l'écrou formant une face d'appui 36 pour permettre un montage indifférencié de l'écrou 28 dans le bouchon 44.

Cette configuration est particulièrement avantageuse car elle permet d'éviter à un opérateur ou à un automate de montage en charge du montage de rechercher le sens de montage correct de l'écrou 28 dans le bouchon 44. A ce titre, cette configuration permet un gain de temps appréciable dans le cadre d'un processus d'industrialisation.

Pour permettre le maintien du bouchon 44 dans le corps creux 14, comme l'illustrent les figures 2 à 5, le bouchon 44 comporte une portée 59 d'emboîtement destinée à coopérer avec le bord de la lumière 42 de la troisième paroi 40 du corps creux 14.

Enfin, il sera compris que pour àssurer un maintien optimal de la vis 18 par l'écrou 28, la vis 18 et l'écrou 28 sont réalisés en acier.

Dans cette configuration, la fixation par vissage de l'élément d'équipement 16 peut être effectuée selon un procédé comportant :
- une première étape (non représentée) au cours de laquelle on introduit l'écrou 28 entre les pattes 50 du bouchon 44,
- une deuxième étape (non représentée) au cours de laquelle on introduit le bouchon 44 et l'écrou 28 dans la lumière 42 du corps creux 14,
- une troisième étape au cours de laquelle on introduit la vis 18 dans le perçage 20 de la première paroi 22 du corps creux 14 puis dans le perçage taraudé 30 de l'écrou 28, comme représenté à la figure 2,
- une quatrième étape, représentée à la figure 3, au cours de laquelle on effectue une rotation de la vis 18 pour libérer l'écrou 28 du bouchon 44, les pattes 50 s'écartant par exemple en flexion pour permettre la libération de l'écrou 28.
- une cinquième étape au cours de laquelle on poursuit la rotation de la vis 18 pour faire pivoter l'écrou 28 de manière qu'un des ses pans 54 formant une face d'appui 36 immobilise l'écrou 28 en rotation contre la face intérieure 38 de la deuxième paroi 24 du corps creux 14,
- une sixième et dernière étape au cours de laquelle on termine la rotation de la vis 28 de manière que la face d'appui 36 de l'écrou 28 glisse contre la face intérieure 38 de la deuxième paroi 24 du corps creux 14 et de manière que sa face 32 de serrage vienne serrer la première paroi 22 du corps creux 14.

Il sera compris qu'il est aussi possible, par exemple dans le cas d'une opération d'après-vente, d'envisager une étape préalable au cours de laquelle on enlève des bouchons obturant la lumière 42 et le perçage 20.

L'invention permet donc de réaliser un montage simple, solide, et peu coûteux d'un élément 16 d'équipement, tel qu'un attelage ou un porte-vélos sur un corps creux 14 d'un véhicule automobile. L'élément 16 est aisément démontable afin d'en enlever les différents accessoires qui pourraient y être liés.

## Revendications

1. Agencement (10) pour la fixation par vissage d'un élément (12), sur un corps creux tel qu'un corps creux (14), du type dans lequel l'élément d'équipement (12) comporte au moins un perçage (16) qui est traversé par une vis axiale (18) de fixation qui est reçue dans au moins un perçage (20) d'une première paroi (22) du corps creux (14) et du type dans lequel le corps creux (14) présente une section sensiblement polygonale, notamment rectangulaire, comportant au moins une deuxième paroi (24) perpendiculaire à la première paroi (22),
**caractérisé en ce qu'**il comporte au moins un moyen d'insertion (26) dans le corps creux (14) d'un écrou (28), dont au moins un perçage axial taraudé (30) est complémentaire de la vis (18), et dont une face (32) de serrage est destinée à être serrée contre une face intérieure (34) de la première paroi (22) du corps creux (14), et **en ce que** ledit écrou (28) comporte au moins une face d'appui (36), qui est parallèle à la direction axiale (A) et qui est excentrée par rapport à son perçage (30) d'une distance (D) supérieure à la distance (d) séparant l'axe du perçage (20) de la deuxième paroi (24), pour permettre un blocage en rotation de l'écrou (28) par immobilisation de sa face d'appui (36) contre une face intérieure (38) de la deuxième paroi (24) du corps creux (14) lors de son serrage.

2. Agencement (10) selon la revendication précédente,
**caractérisé en ce que** le moyen d'insertion (26) de l'écrou (28) dans le corps creux (14) est porté par une troisième paroi (40) du corps creux (14), qui est opposée à la première paroi (22), et qui comporte une lumière (42), agencée sensiblement en regard du perçage (20) de la première paroi (22).

3. Agencement (10) selon la revendication précédente,
**caractérisé en ce que** le moyen d'insertion forme un bouchon (44) de la lumière (42), qui est d'un encombrement au moins égal à celui de l'écrou (28), et qui comporte des moyens de portage et de libération de l'écrou (28) qui sont destinés à permettre l'introduction de l'écrou (28) dans le corps creux (14) avec le bouchon (44) puis sa libération du bouchon (44).

4. Agencement selon la revendication précédente,
**caractérisé en ce que** les moyens de portage et de libération de l'écrou par le bouchon comportent au moins :
- une face transversale d'assise (46) du bouchon (44), qui est destinée à recevoir une face (48) de l'écrou (28) opposée à sa face (32) de serrage, et
- au moins deux bras (50) parallèles à la direction axiale (A) qui sont destinés à enserrer la périphérie de l'écrou (28).

5. Agencement (10) selon la revendication précédente,
**caractérisé en ce que** l'extrémité libre de chaque bras (50) comporte un ergot (52) tourné vers l'écrou (28), qui est destiné à immobiliser axialement l'écrou (28) dans le bouchon (44) entre sa face de serrage (32) et la face (48) opposée.

6. Agencement (10) selon l'une des revendications 4 ou 5,
**caractérisé en ce que** l'écrou (28) est sensiblement octogonal et **en ce que** les moyens de portage et de libération de l'écrou (28) comportent quatre bras (50) destinés à immobiliser quatre pans (54) non consécutifs de l'écrou (28).

7. Agencement (10) selon la revendication précédente,
**caractérisé en ce que** l'écrou (28) comporte deux perçages axiaux (30) taraudés agencés chacun à une même distance d'un pan (54) de l'écrou formant une face d'appui (36) de l'écrou (28), pour permettre un montage indifférencié de l'écrou (28) dans le bouchon (34).

8. Agencement (10) selon l'une des revendications 2 à 7,
**caractérisé en ce que** le bouchon (44) comporte une portée (59) d'emboîtement destinée à coopérer avec le bord de la lumière (42) de la troisième paroi (40) du corps creux (14).

9. Agencement (10) selon l'une des revendications 2 à 8, **caractérisé en ce que** le bouchon (44) est réalisé en un matériau plastique.

10. Agencement (10) selon l'une des revendications 4 à 9,
**caractérisé en ce que** les ergots (52) du bouchon (44) sont destructibles lors du retrait de l'écrou (28).

11. Agencement (10) selon l'une des revendications 3 à 9,
**caractérisé en ce que** les bras (50) du bouchon (44) sont flexibles.

12. Procédé de montage d'un agencement selon les revendications 1 à 9 prises en combinaison avec l'une des revendications 10 ou 11, **caractérisé en ce qu'**il comporte :
- une première étape au cours de laquelle on introduit l'écrou (28) dans le bouchon (44).
- une deuxième étape au cours de laquelle on introduit le bouchon (44) portant l'écrou (28) dans la lumière (42) du corps creux (14),
- une troisième étape au cours de laquelle on introduit la vis (18) dans le perçage (20) de la première paroi (22) du corps creux (14) puis dans le perçage taraudé (30) de l'écrou (28),
- une quatrième étape au cours de laquelle on effectue une rotation de la vis (18) pour libérer l'écrou (28) du bouchon (44),
- une cinquième étape au cours de laquelle on poursuit la rotation de la vis (18) pour faire pivoter l'écrou (28) de manière que son pan (54) formant la face d'appui (36) immobilise l'écrou (28) en rotation contre la face intérieure (38) de la deuxième paroi (24) du corps creux (14),
- une sixième et dernière étape au cours de laquelle on termine la rotation de la vis (18) de manière que la face d'appui (36) de l'écrou (28) glisse contre la face intérieure (38) de la deuxième paroi (24) du corps creux (14) et de manière que sa face (32) de serrage vienne serrer la première paroi (22) du corps creux (14).

## Claims

1. Arrangement (10) for screw-fastening an element (12) to a hollow body such as a hollow body (14) of the type in which the equipment element (12) comprises at least one drilling (16) through which passes an axial fastening screw (18) which is held in at least one drilling (20) in a first wall (22) of the hollow body (14) and of the type in which the hollow body (14) has a substantially polygonal, particularly rectangular, cross section comprising at least one second wall (24) perpendicular to the first wall (22),
**characterized in that** it comprises at least one means (26) of inserting into the hollow body (14) a nut (28), of which at least one tapped axial drilling (30) complements the screw (18) and of which a tightening face (32) is intended to be tightened against an interior face (34) of the first wall (22) of the hollow body (14), and **in that** the said nut (28) comprises at least one bearing face (36) which is parallel to the axial direction (A) and which is off-centred with respect to its drilling (30) by a distance (D) greater than the distance (d) that separates the axis of the drilling (20) from the second wall (24) so as to allow the nut (28) to be prevented from rotating by its bearing face (36) becoming jammed against an interior face (38) of the second wall (24) of the hollow body (14) as it is tightened.

2. Arrangement (10) according to the preceding claim,
**characterized in that** the means (26) of inserting the nut (28) into the hollow body (14) is borne by a third wall (40) of the hollow body (14), which is opposite the first wall (22) and which comprises a slot (42), positioned substantially facing the drilling (20) in the first wall (22).

3. Arrangement (10) according to the preceding claim,
**characterized in that** the means of insertion forms a plug (44) that plugs the slot (42), that is of a size at least equal to that of the nut (28) and which comprises means of carrying and of releasing the nut (28) which means are intended to allow the nut (28) to be introduced into the hollow body (14) with the plug (44) and then released from the plug (44).

4. Arrangement according to the preceding claim,
**characterized in that** the means via which the plug carries and releases the nut comprise at least:
- a transverse seating face (46) of the plug (44), which is intended to accept a face (48) of the nut (28) which is an opposite face to its tightening face (32), and
- at least two arms (50) parallel to the axial direction (A) and which are intended to grip the periphery of the nut (28).

5. Arrangement (10) according to the preceding claim,
**characterized in that** the free end of each arm (50) comprises a lug (52) facing towards the nut (28) and which is intended to immobilize the nut (28) axially in the plug (44) between its tightening face (32) and the opposite face (48).

6. Arrangement (10) according to one of Claims 4 and 5, **characterized in that** the nut (28) is substantially octagonal, and **in that** the means of carrying and releasing the nut (28) comprise four arms (50) intended to immobilize four non-consecutive flats (54) of the nut (28).

7. Arrangement (10) according to the preceding claim,
**characterized in that** the nut (28) has two tapped axial drillings (30) each positioned the same distance away from a flat (54) of the nut that forms a bearing face (36) of the nut (28), so as to allow the nut (28) to be mounted in the plug (34) either way around.

8. Arrangement (10) according to one of Claims 2 to 7, **characterized in that** the plug (44) comprises an insetting journal (59) intended to collaborate with the edge of the slot (42) in the third wall (40) of the hollow body (14).

9. Arrangement (10) according to one of Claims 2 to 8, **characterized in that** the plug (44) is made of a plastic material.

10. Arrangement (10) according to one of Claims 4 to 9, **characterized in that** the lugs (52) of the plug (44) are able to be destroyed as the nut (28) is removed.

11. Arrangement (10) according to one of Claims 3 to 9, **characterized in that** the arms (50) of the plug (44) are flexible.

12. Method of assembling an arrangement according to Claims 1 to 9 taken in combination with one of Claims 10 and 11, **characterized in that** it comprises:
- a first step during which the nut (28) is introduced into the plug (44);
- a second step during which the plug (44) carrying the nut (28) is introduced into the slot (42) in the hollow body (14);
- a third step during which the screw (18) is introduced into the drilling (20) in the first wall (22) of the hollow body (14) and then into the tapped drilling (30) in the nut (28);
- a fourth step during which the screw (18) is turned to release the nut (28) from the plug (44);
- a fifth step during which the screw (18) continues to be turned in order to cause the nut (28) to pivot in such a way that its flat (54) that forms the bearing face (36) prevents the nut (28) from rotating by being jammed against the interior face (38) of the second wall (24) of the hollow body (14); and
- a sixth and final step during which the turning of the screw (18) is finished such that the bearing face (36) of the nut (28) slides against the interior face (38) of the second wall (24) of the hollow body (14) and such that the tightening face (32) thereof is tightened against the first wall (22) of the hollow body (14).

## Patentansprüche

1. Anordnung (10) zur Schraubbefestigung eines Elements (12) an einem Hohlkörper wie einem Hohlkörper (14), von dem Typ, bei dem das Ausstattungselement (12) mindestens eine Bohrung (16) aufweist, die von einer axialen Befestigungsschraube (18) durchquert wird, welche in mindestens einer Bohrung (20) einer ersten Wand (22) des Hohlkörpers (14) aufgenommen wird, und vom dem Typ, bei dem der Hohlkörper (14) einen im Wesentlichen polygonalen, insbesondere rechteckigen Querschnitt aufweist, der mindestens eine zweite Wand (24) lotrecht zur ersten Wand (22) aufweist,
**dadurch gekennzeichnet, dass** sie mindestens ein Mittel (26) zum Einführen einer Mutter (28) in den Hohlkörper (14) aufweist, von der mindestens eine axiale Gewindebohrung (30) zur Schraube (18) komplementär ist und von der eine Klemmseite (32) dazu bestimmt ist, gegen eine Innenseite (34) der ersten Wand (22) des Hohlkörpers (14) geklemmt zu werden, und dass die Mutter (28) mindestens eine Auflageseite (36) aufweist, die parallel zur axialen Richtung (A) und bezüglich ihrer Bohrung (30) um einen Abstand (D) außermittig ist, der größer ist als der Abstand (d), der die Achse der Bohrung (20) von der zweiten Wand (24) trennt, um eine Drehsperre der Mutter (28) durch Blockieren ihrer Auflageseite (36) gegen eine Innenseite (38) der zweiten Wand (24) des Hohlkörpers (14) bei ihrem Festklemmen zu erlauben.

2. Anordnung (10) nach dem vorhergehenden Anspruch, **dadurch gekennzeichnet, dass** das Mittel (26) zum Einführen der Mutter (28) in den Hohlkörper (14) von einer dritten Wand (40) des Hohlkörpers (14) getragen wird, die der ersten Wand (22) gegenüberliegt und eine Öffnung (42) aufweist, die im Wesentlichen gegenüber der Bohrung (20) der ersten Wand (22) angeordnet ist.

3. Anordnung (10) nach dem vorhergehenden Anspruch, **dadurch gekennzeichnet, dass** das Einführmittel einen Stopfen (44) der Öffnung (42) bildet, der einen Raumbedarf mindestens gleich demjenigen der Mutter (28) hat, und der Trage- und Lösemittel der Mutter (28) aufweist, die dazu bestimmt sind, das Einführen der Mutter (28) in den Hohlkörper (14) mit dem Stopfen (44) und dann ihr Lösen vom Stopfen (44) zu erlauben.

4. Anordnung nach dem vorhergehenden Anspruch, **dadurch gekennzeichnet, dass** die Trage- und Lösemittel der Mutter durch den Stopfen mindestens aufweisen:
- eine Querauflageseite (46) des Stopfens (44), die dazu bestimmt ist, eine Seite (48) der Mutter (28) entgegengesetzt zu ihrer Klemmseite (32) aufzunehmen, und
- mindestens zwei Arme (50) parallel zur axialen Richtung (A), die dazu bestimmt sind, den Umfang der Mutter (28) zu umschließen.

5. Anordnung (10) nach dem vorhergehenden Anspruch, **dadurch gekennzeichnet, dass** das freie Ende jedes Arms (50) einen zur Mutter (28) weisenden Zapfen (52) aufweist, der dazu bestimmt ist, die Mutter (28) im Stopfen (44) zwischen ihrer Klemmseite (32) und der gegenüberliegenden Seite (48) axial zu blockieren.

6. Anordnung (10) nach einem der Ansprüche 4 oder 5, **dadurch gekennzeichnet, dass** die Mutter (28) im Wesentlichen achteckig ist, und dass die Trage- und Lösemittel der Mutter (28) vier Arme (50) aufweisen, die dazu bestimmt sind, vier nicht aufeinanderfolgende Flächen (54) der Mutter (28) zu blockieren.

7. Anordnung (10) nach dem vorhergehenden Anspruch, **dadurch gekennzeichnet, dass** die Mutter (28) zwei axiale Gewindebohrungen (30) aufweist, die je in gleichem Abstand zu einer Fläche (54) der Mutter angeordnet sind, die eine Auflageseite (36) der Mutter (28) bildet, um eine undifferenzierte Montage der Mutter (28) in den Stopfen (34) zu erlauben.

8. Anordnung (10) nach einem der Ansprüche 2 bis 7, **dadurch gekennzeichnet, dass** der Stopfen (44) ein Einpass-Auflager (59) aufweist, das dazu bestimmt ist, mit dem Rand der Öffnung (42) der dritten Wand (40) des Hohlkörpers (14) zusammenzuwirken.

9. Anordnung (10) nach einem der Ansprüche 2 bis 8, **dadurch gekennzeichnet, dass** der Stopfen (44) aus einem Kunststoff hergestellt wird.

10. Anordnung (10) nach einem der Ansprüche 4 bis 9, **dadurch gekennzeichnet, dass** die Zapfen (52) des Stopfens (44) beim Herausziehen der Mutter (28) zerstörbar sind.

11. Anordnung (10) nach einem der Ansprüche 3 bis 9, **dadurch gekennzeichnet, dass** die Arme (50) des Stopfens (44) elastisch sind.

12. Verfahren zur Montage einer Anordnung nach den Ansprüchen 1 bis 9 in Kombination mit einem der Ansprüche 10 oder 11, **dadurch gekennzeichnet, dass** es aufweist:
- einen ersten Schritt, während dem die Mutter (28) in den Stopfen (44) eingeführt wird,
- einen zweiten Schritt, während dem der die Mutter (28) tragende Stopfen (44) in die Öffnung (42) des Hohlkörpers (14) eingeführt wird,
- einen dritten Schritt, während dem die Schraube (18) in die Bohrung (20) der ersten Wand (22) des Hohlkörpers (14) und dann in die Gewindebohrung (30) der Mutter (28) eingeführt wird,
- einen vierten Schritt, während dem eine Drehung der Schraube (18) durchgeführt wird, um die Mutter (28) aus dem Stopfen (44) zu lösen,
- einen fünften Schritt, während dem die Drehung der Schraube (18) fortgesetzt wird, um die Mutter (28) so zu schwenken, dass ihre die Auflageseite (36) bildende Fläche die Mutter (28) in Drehung gegen die Innenseite (38) der zweiten Wand (24) des Hohlkörpers (14) sperrt,
- einen sechsten und letzten Schritt, während dem die Drehung der Schraube (18) so beendet wird, dass die Auflageseite (36) der Mutter (28) gegen die Innenseite (38) der zweiten Wand (24) des Hohlkörpers (14) gleitet und dass ihre Klemmseite (32) sich gegen die erste Wand (22) des Hohlkörpers (14) klemmt.
